# EUROPÄISCHE PATENTSCHRIFT

(11) **EP 3 199 852 B1**
(45) Veröffentlichungstag und Bekanntmachung des Hinweises auf die Patenterteilung: **30.10.2019**
(21) Anmeldenummer: 17153611.3
(22) Anmeldetag: 27.01.2017
(51) Int. Cl.: F16K 47/04, F16K 1/54, F16K 3/26

(54) **STELLVENTIL**
CONTROL VALVE
VANNE DE RÉGULATION

(30) Priorität: 28.01.2016 DE 102016101547
(43) Veröffentlichungstag der Anmeldung: 02.08.2017
(73) Patentinhaber: Samson AG, 60314 Frankfurt (DE)
(72) Erfinder: Bräuer, Anke, 63526 Erlensee (DE); Kiesbauer, Jörg, 64859 Eppertshausen (DE); Hörschken, Klaus, 65606 Villmar (DE)
(74) Vertreter: Puschmann Borchert Bardehle Patentanwälte Partnerschaft mbB

(56) Entgegenhaltungen:
- CH-A2- 706 952
- FR-A1- 2 303 213
- JP-A- S 576 164
- US-A- 3 230 973
- US-A- 4 638 833
- US-A1- 2015 252 906

## Beschreibung

Die Erfindung betrifft ein Stellventil gemäß dem Oberbegriff des Anspruchs 1.

Gattungsgemäße Stellventile umfassen einen Ventilsitz und ein Drosselelement. Das Drosselelement ist derart gestaltet, dass sich eine über den Hub ändernde Querschnittsflächendifferenz zwischen dem Ventilsitz und dem Drosselelement ergibt, worüber eine Durchflusssteuerung erfolgt.

Die DE 43 31 417 A1 offenbart ein solches Stellventil, wobei die Querschnittsflächenänderung von einer in einen weitgehend abdichtenden Ansatz eingearbeiteten Ausnehmung erzeugt wird. Dadurch wird eine gegenüber einer vollständig umlaufenden Einschnürung im Bereich kleiner Durchflussmengen eine präzisere Durchflusssteuerung erreicht.

Die DE 695 17 363 T2 offenbart ein Regelventil mit einem Drosselelement, das als Käfig ausgebildet ist, wobei der Käfig mit einem Ventilsitz zusammenwirkt, der eine Dichtungsfläche aufweist. Dadurch wird eine zweistufige Strömungsregelung ermöglicht.

Die US 3,230,973 zeigt ein Ventil, das zwei verschiedene Öffnungsstellungen realisieren kann, wobei ein erster Öffnungsbereich einen ersten Volumenstrom zulässt und in einer zweiten Öffnungsstellung einen zweiten Volumenstrom. Eine ähnliche Anordnung offenbaren auch die CH 706 952 A2 und die US 2015 / 0252906 A1.

Die FR 2 303 213 offenbart ein Ventil, das über eine Drehbewegung betätigt wird, wobei ein erster Öffnungsbereich durch eine Dichtung vom zweiten Öffnungsbereich abgetrennt ist, wobei der zweite Öffnungsbereich eine konische Gestaltung zur Feineinstellung einer Strömung aufweist.

Die JPS576164 A offenbart ein Magnetventil, das zwei Öffnungsbereiche aufweist, die in Form von Durchbrüchen gebildet sind, wobei in einer Gleichgewichtsstellung zwischen Federkraft und Magnetkraft, die über einen geringen Spulenstrom eingestellt wird, eine erste Öffnungsstellung eingestellt wird.

Dennoch ergibt sich eine Unschärfe, die aus den Toleranzen zwischen Ventilsitz und Drosselelement entsteht.

Es ist Aufgabe der Erfindung eine präzisere Durchflusssteuerung kleiner Durchflussmengen zu erreichen und dadurch ein hohes Stellverhältnis zu gewährleisten, wobei Stellverhältnis das Verhältnis von Nenndurchfluss zum kleinsten regelbaren Durchfluss bezeichnet.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterentwicklungen der Erfindung.

In bekannter Weise umfasst ein Stellventil einen Ventilsitz und ein Drosselelement, wobei das Drosselelement eine Dichtkante zum Abdichten des Ventilsitzes aufweist. Ferner weist das Drosselelement einen ersten Öffnungsbereich und einen zweiten Öffnungsbereich auf. Zudem ist das Drosselelement derart relativ zum Ventilsitz durch eine Stellbewegung stellbar, dass der erste Öffnungsbereich in einer ersten Öffnungsstellung und der erste und/oder der zweite Öffnungsbereich in einer zweiten Öffnungsstellung wirksam ist.

Erfindungsgemäß ist vorgesehen, dass ein Dichtelement am Drosselelement angeordnet ist, so dass das Drosselelement im Übergang von der ersten zur zweiten Öffnungsstellung eine Abdichtlage überfährt, wobei in der Abdichtlage der erste Öffnungsbereich wirksam und der zweite Öffnungsbereich nicht wirksam ist.

Auf diese Weise kann eine präzise Regelung im ersten Öffnungsbereich erfolgen, da die Toleranzeinflüsse aufgrund der Dichtung zum zweiten Öffnungsbereich reduziert sind. So kann der erste Öffnungsbereich auch bei einem geringen Durchfluss bei hoher Präzision und damit regelbar betrieben werden. Dadurch kann ein hohes Stellverhältnis bei geringem Verschleiß erreicht werden.

Erfindungsgemäß umfasst das Drosselelement einen Hohlkörper, der eine Wandung aufweist, wobei die Wandung im ersten Öffnungsbereich Durchbrüche aufweist. Die Durchbrüche im ersten Öffnungsbereich weisen insbesondere eine Durchbruchsfläche von weniger als 5% der Ventilsitzfläche auf.

Indem das Dichtelement am Drosselelement zwischen dem ersten und dem zweiten Öffnungsbereich, die jeweils wenigstens einen Durchbruch in der Wandung aufweisen, angeordnet ist, wird das Dichtungselement nicht dadurch belastet, dass das Dichtungselement im Betrieb von dem mit Durchbrüchen ausgestatteten Drosselelement überfahren wird. Das Dichtelement befindet sich vielmehr in Kontakt mit der glatten Oberfläche des Ventilsitzes und kann daher verschleißarm über diese hinwegbewegt werden.

Durch die Gestaltung des Drosselelements als Hohlkörper kann eine umlaufende Dichtung in Abdichtlage mit äußerst geringer Leckage bereitgestellt werden, wobei dennoch ein präziser Durchfluss durch die Durchbrüche ermöglicht wird. Die Durchbrüche sind insbesondere als Bohrungen in die Wandung des Hohlkörpers eingebracht. Durch diese Gestaltung ist die Durchflussmenge unbeeinflusst von der Toleranz zwischen Ventilsitz und Drosselelement, sondern beruht ausschließlich auf dem Durchmesser der Durchbrüche in der Wandung.

Erfindungsgemäß ist das Drosselelement auch im zweiten Öffnungsbereich durch einen Hohlkörper gebildet, der eine Wandung umfasst, wobei die Wandung Durchbrüche aufweist. Die Durchbrüche können Bohrungen und / oder großräumige Ausnehmungen wie Fenster sein. Der zweite Öffnungsbereich kann die Hauptöffnung darstellen.

In einer weiteren bevorzugten Ausgestaltung kann das Drosselelement mehrteilig ausgebildet sein, wobei der erste Öffnungsbereich und der zweite Öffnungsbereich aus unterschiedlichen Bauteilen gebildet sind. Auf diese Weise kann der Dichtbereich zwischen dem Öffnungsbereich und dem Schließbereich auf einfache Weise bereitgestellt werden.

Bevorzugt kann das Dichtelement ein Dichtring, insbesondere aufweisend Grafit, Elastomere, Metall, PTFE sein, beziehungsweise ein Stoffgemisch aus genannten Bestandteilen.

Der Ventilsitz weist insbesondere eine Sitzkante zur Zusammenwirkung mit der Dichtkante des Drosselelements in Schließstellung auf, wobei der Ventilsitz auch einen Drosselbereich aufweist, in welchem das Dichtelement dichtend axial bewegbar ist.

Von der Sitzkante zum Drosselbereich verläuft der Ventilsitz geschrägt, wobei der Übergang in den Drosselbereich gerundet ausgeführt ist.

Dies hat den Vorteil, dass, wenn sich das Drosselelement in einer Ventilstellung befindet, in der das Drosselelement mit seinem Dichtbereich vollständig außerhalb des Ventilsitzes liegt, von dort aus wieder verschleißarm in den Drosselbereich des Ventilsitzes eingeführt werden kann.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in den Zeichnungen werden die in der unten aufgeführten Liste der Bezugszeichen verwendeten Begriffe und zugeordneten Bezugszeichen verwendet. In der Zeichnung bedeutet:
- Fig. 1: eine ausschnittsweise schematische Schnittansicht eines erfindungsgemäßen Stellventils im geschlossenen Zustand,
- Fig. 2: eine schematische Schnittansicht eines erfindungsgemäßen Stellventils gemäß Fig.1 in einer ersten Öffnungsstellung,
- Fig. 3: eine ausschnittsweise schematische Schnittansicht eines erfindungsgemäßen Stellventils gemäß Fig. 1 in einer zweiten Öffnungsstellung, und
- Fig. 4: eine ausschnittsweise schematische Schnittansicht einer Ausführungsform eines Stellventils.

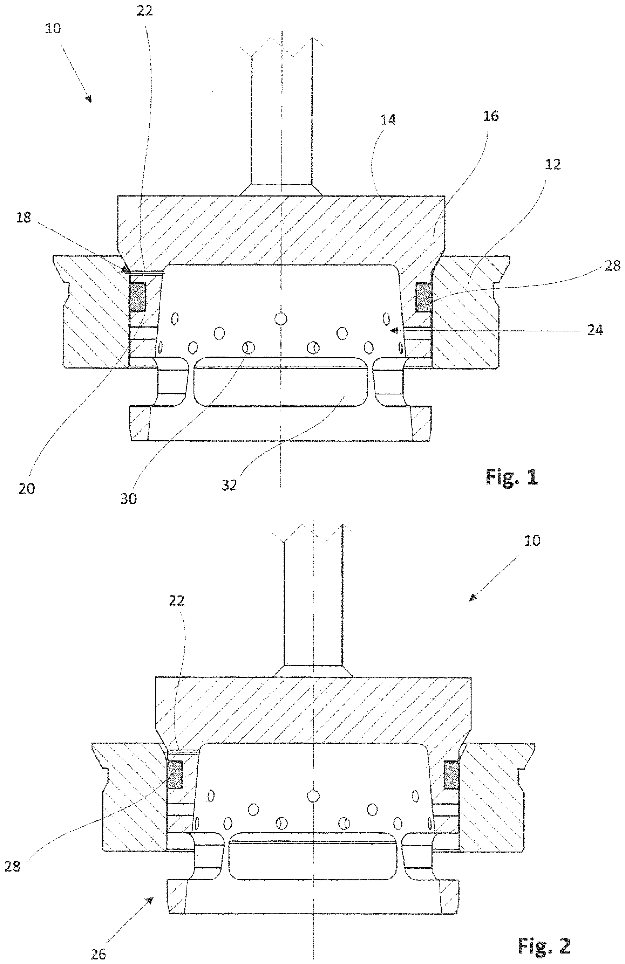

Fig. 1 zeigt ausschnittsweise eine schematische Schnittansicht eines erfindungsgemäßen Stellventils 10, umfassend einen Ventilsitz 12 und ein Drosselelement 14. Die Darstellung zeigt das Stellventil 10 in einer Schließstellung, in welcher der Ventilsitz 12 und das Drosselelement 14 an einer Dichtkante 16 aneinander liegen. Der Grundkörper des Drosselelements 14 ist als Hohlkörper ausgebildet und weist in einem ersten Öffnungsbereich 18 eine die Wandung 20 des Hohlkörpers durchbrechende Bohrung 22 auf. Weitere Durchbrüche 24, welche aus Bohrungen 30 und Fensteröffnungen 32 bestehen können, sind in einem zweiten Öffnungsbereich 26 in die Wandung 20 eingebracht.

Zwischen dem ersten Öffnungsbereich 18 und dem zweiten Öffnungsbereich 26 ist in eine in die Wandung eingebrachte Nut ein Dichtungsring 28 eingelegt. Der Dichtungsring 28 dichtet mit der Wandung des Ventilsitzes den zweiten Öffnungsbereich 26 ab.

Fig. 2 zeigt eine ausschnittsweise schematische Schnittansicht eines erfindungsgemäßen Stillventils 10 in einer ersten Öffnungsstellung. Die wenigstens eine Bohrung 22 erlaubt in dieser ersten Öffnungsstellung einen geringen aber präzisen Durchtritt des zu regelnden Fluids. Durch den Dichtungsring 28, der sich in der ersten Öffnungsstellung in der Abdichtlage befindet, wird ein Durchtritt des Fluids durch den zweiten Öffnungsbereich 26 unterbunden.

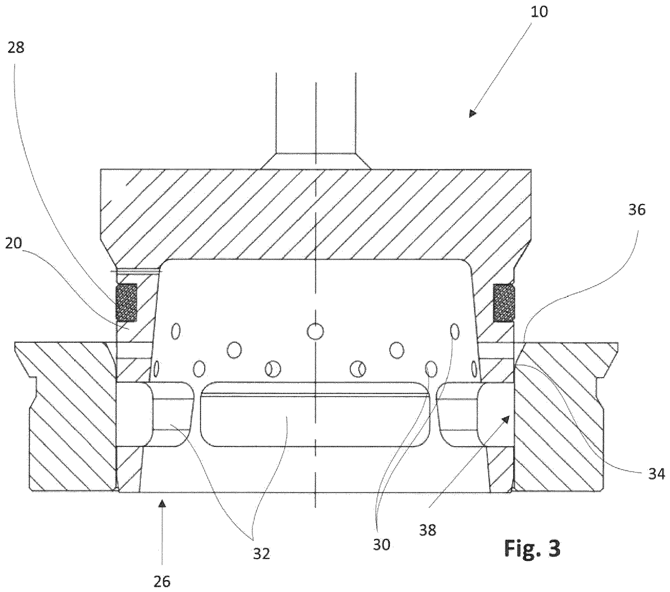

Fig. 3 zeigt ausschnittsweise eine schematische Schnittansicht eines erfindungsgemäßen Stellventils 10 in einer zweiten Öffnungsstellung. Der Dichtungsring 28 befindet sich in diesem Zustand nicht in einer Abdichtlage und der Fluidstrom erfolgt unter anderem über den zweiten Öffnungsbereich 26. Im zweiten Öffnungsbereich 26 können eine Vielzahl von Bohrungen 30 in der Wandung 20 vorgesehen sein, die einen Durchtritt des Fluids in der zweiten Öffnungsstellung ermöglichen. Zudem können auch Durchbrüche vorgesehen sein, die eine weitgehend ungedrosselte Durchströmung ermöglichen und als Fenster 32 bezeichnet werden. Ferner ist der gerundete Übergang 34 von der Schräge des Ventilsitzes zum Drosselbereich 38 dargestellt, wobei die Schräge der von der Sitzkante 36 des Ventilsitzes sich in Richtung des Drosselbereichs erstreckt. Dadurch kann der Dichtungsring 28 wieder schonend aus der in Fig. 3 dargestellten Ventilstellung in eine Ventilstellung gemäß Fig. 2 gebracht werden.

In der zweiten Öffnungsstellung ist ein gegenüber dem Volumenstrom in der ersten Öffnungsstellung sehr viel größerer Volumenstrom durch den Ventilsitz ermöglicht. So wird mit einem erfindungsgemäßen Ventil ein ausgesprochen hohes Stellverhältnis ermöglicht.

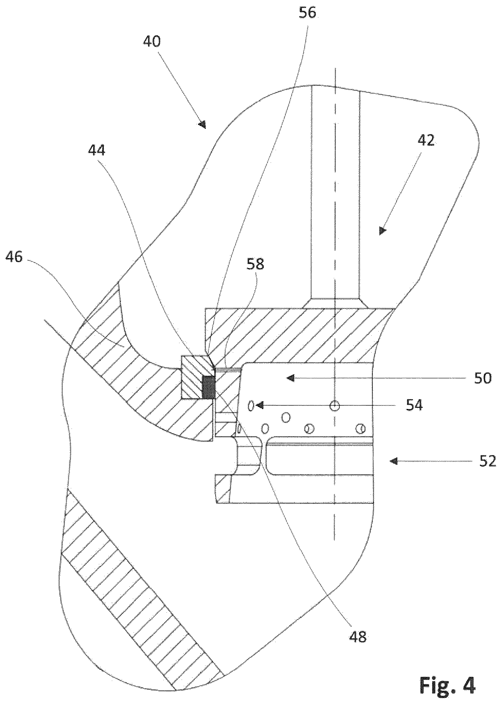

Fig. 4 zeigt ein Stellventil 40 in einer ausschnittsweisen schematischen Schnittansicht. Der Drosselkörper 42 wirkt mit einem Ventilsitz 44 zusammen, der in das Ventilgehäuse 46 eingebracht ist. Der Ventilsitz 44 ist mit einem umlaufenden Dichtring 48 versehen.

Ferner weist das Stellelement analog zu der Ausführung wie in Fig.1 bis Fig. 3 beschrieben einen ersten Öffnungsbereich 50 und einen zweiten Öffnungsbereich 52 auf. Zwischen dem ersten Öffnungsbereich 50 und dem zweiten Öffnungsbereich 52 liegt eine geschlossene Wandfläche 54, die in einer Abdichtlage mit dem Dichtungsring 48 zusammenwirkt. Der erste Öffnungsbereich 50 liegt bei geschlossenem Ventil zwischen der Dichtkante 56 des Ventilsitzes und dem Dichtungsring 48. Bei zunehmender Öffnung in die erste Öffnungsstellung bewegt sich der Stellkörper entlang der axialen Ausdehnung des Dichtrings 48 in einer Abdichtlage, bis der zweite Öffnungsbereich den Dichtring 48 überfährt, und die Abdichtlage verlässt. Ab dieser Lage kann ein bis zum Nenndurchfluss zunehmender Durchfluss über den zweiten Öffnungsbereich 52 eingestellt werden.

### Bezugszeichenliste

- 10: Stellventil
- 12: Ventilsitz
- 14: Drosselelement
- 16: Dichtkante
- 18: erster Öffnungsbereich
- 20: Wandung
- 22: Bohrung
- 24: Durchbrüche
- 26: zweiter Öffnungsbereich
- 28: Dichtungsring
- 30: Bohrung
- 32: Fenster
- 34: gerundeter Übergang
- 36: Sitzkante
- 38: Drosselbereich
- 40: Stellventil
- 42: Drosselelement
- 44: Ventilsitz
- 46: Ventilgehäuse
- 48: Dichtungsring
- 50: erster Öffnungsbereich
- 52: zweiter Öffnungsbereich
- 54: Wandung
- 56: Dichtkante
- 58: Durchbrüche

## Patentansprüche

1. Stellventil (10) mit einem Ventilsitz (12) und einem Drosselelement (14), wobei das Drosselelement (14) eine Dichtkante (16) zum Abdichten des Ventilsitzes (12) aufweist, und ferner einen ersten Öffnungsbereich (18) und einen zweiten Öffnungsbereich (26) aufweist, ferner das Drosselelement (14) derart relativ zum Ventilsitz (12) durch eine Stellbewegung stellbar ist, dass der erste Öffnungsbereich (18) in einer ersten Öffnungsstellung und der zweite Öffnungsbereich (26) in einer zweiten Öffnungsstellung wirksam ist, wobei das Drosselelement (14) einen Hohlkörper umfasst, der eine Wandung (20) aufweist, wobei die Wandung (20) im ersten Öffnungsbereich (18), wenigstens einen Durchbruch, insbesondere mindestens eine Bohrung (22) aufweist, wobei die Wandung (20) im zweiten Öffnungsbereich (26) wenigstens einen Durchbruch (24), bevorzugt in Form von mindestens einer Bohrung (30) und/oder einem Fenster (32), aufweist, **dadurch gekennzeichnet, dass** ein Dichtelement (28), das mit dem Ventilsitz (12) zusammenwirkt, am Drosselelement (14) angeordnet ist, so dass das Drosselelement (14) im Übergang von der ersten zur zweiten Öffnungsstellung eine Abdichtlage überfährt, wobei in der Abdichtlage der erste Öffnungsbereich (18) wirksam und der zweite Öffnungsbereich (26) nicht wirksam ist

2. Stellventil nach einem der vorangehenden Ansprüche, **dadurch gekennzeichnet, dass** das Dichtelement ein Dichtungsring (28, 48) ist.

3. Stellventil nach einem der vorangehenden Ansprüche, **dadurch gekennzeichnet, dass** das Dichtelement (28) Grafit und / oder Elastomer und / oder Metall und / oder PTFE aufweist.

4. Stellventil nach einem der vorangehenden Ansprüche, **dadurch gekennzeichnet, dass** das Drosselelement mehrteilig ausgebildet ist, wobei der erste Öffnungsbereich (18, 50) und der zweite Öffnungsbereich (26, 52) aus unterschiedlichen Teilen gebildet sind.

5. Stellventil nach einem der vorangehenden Ansprüche, **dadurch gekennzeichnet, dass** der Ventilsitz eine Sitzkante (36) und einen Drosselbereich (38) aufweist, wobei der Übergang von Sitzkante zum Drosselbereich (38) eine Schräge aufweist und der Übergang von der Schräge zum Drosselbereich als gerundeter Übergang (34) ausgeführt ist.

## Claims

1. Control valve (10) having a valve seat (12) and a throttle element (14), the throttle element (14) having a sealing edge (16) for sealing the valve seat (12), and furthermore having a first opening area (18) and a second opening area (26), which throttle element (14) can furthermore be set relative to the valve seat (12) by a setting movement in such a way that the first opening area (18) will be effective in a first opening position and the second opening area (18) will be effective in a second opening position, said throttle element (14) comprising a hollow body which has a wall (20), which wall (20) has at least one opening, in particular at least one bore (22), in the first opening area (18), which wall (20) has at least one opening (24), preferably in the form of at least one bore (30) and/or one window (32), in the second opening area (26), **characterized in that** a sealing element (28) which cooperates with the valve seat (12) is disposed on the throttle element (14), with the result that the throttle element (14) will pass through a sealing position as it transitions from the first to the second opening position, wherein in the sealing position, the first opening area (18) will be effective and the second opening area (26) will not be effective.

2. Control valve according to any one of the preceding claims, **characterized in that** the sealing element is a sealing ring (28, 48).

3. Control valve according to any one of the preceding claims, **characterized in that** the sealing element (28) comprises graphite and/or an elastomer and/or metal and/or PTFE.

4. Control valve according to any one of the preceding claims, **characterized in that** the throttle element is of a multi-part design, with the first opening area (18, 50) and the second opening area (26, 52) being formed from different parts.

5. Control valve according to any one of the preceding claims, **characterized in that** the valve seat has a seat edge (36) and a throttle area (38), wherein the transition from the seat edge to the throttle area (38) has an inclination, and the transition from the inclination to the throttle area is designed as a rounded transition (34).

## Revendications

1. Vanne de régulation (10) comprenant un siège de vanne (12) et un élément d'étranglement (14), l'élément d'étranglement (14) présentant une arrête d'étanchéité (16) destinée à rendre le siège de vanne (12) étanche, et comprenant en outre une première zone d'ouverture (18) et une deuxième zone d'ouverture (26), l'élément d'étranglement (14) pouvant être en outre réglé par rapport au siège de vanne (12) par un mouvement de réglage de telle sorte que la première zone d'ouverture (18) soit active dans une première position d'ouverture et la deuxième zone d'ouverture (26) soit active dans une deuxième position d'ouverture, l'élément d'étranglement (14) comprenant un corps creux qui présente une paroi (20), la paroi (20) présentant dans la première zone d'ouverture (18) au moins un passage, notamment au moins une perforation (22), la paroi (20) présentant dans la deuxième zone d'ouverture (26) au moins un passage (24), de préférence sous la forme d'une perforation (30) et/ou d'une fenêtre (32), **caractérisée en ce qu'**un élément d'étanchéité (28) coopérant avec le siège de vanne (12) est disposé sur l'élément d'étranglement (14) de sorte que l'élément d'étranglement (14) traverse une couche d'étanchéification lors du passage de la première à la deuxième position d'ouverture, la première zone d'ouverture (18) étant active dans la couche d'étanchéification et la deuxième zone d'ouverture (26) n'étant pas active dans celle-ci.

2. Vanne de régulation selon l'une des revendications précédentes, **caractérisée en ce que** l'élément d'étanchéité est un joint d'étanchéité annulaire (28, 48).

3. Vanne de régulation selon l'une des revendications précédentes, **caractérisée en ce que** l'élément d'étanchéité (28) présente du graphite et/ou de l'élastomère et/ou du métal et/ou du PTFE.

4. Vanne de régulation selon l'une des revendications précédentes, **caractérisée en ce que** l'élément d'étranglement est conçu en plusieurs parties, la première zone d'ouverture (18, 50) et la deuxième zone d'ouverture (26, 52) étant constituées de parties différentes.

5. Vanne de régulation selon l'une des revendications précédentes, **caractérisée en ce que** le siège de vanne présente une arrête de siège (36) et une zone d'étranglement (38), le passage de l'arrête de siège à la zone d'étranglement (38) présentant un biseau et le passage du biseau à la zone d'étranglement étant conçu sous la forme d'un passage arrondi (34).
